# EUROPÄISCHE PATENTSCHRIFT

(11) **EP 2 564 803 B1**
(45) Veröffentlichungstag und Bekanntmachung des Hinweises auf die Patenterteilung: **30.11.2016**
(21) Anmeldenummer: 11179293.3
(22) Anmeldetag: 30.08.2011
(51) Int. Cl.: A61C 3/06

(54) **Werkzeug für die Bearbeitung von Oberflächen dentaler Materialien**
Tool for preparing surfaces of dental materials
Outil pour le traitement de surfaces de matériaux dentaires

(43) Veröffentlichungstag der Anmeldung: 06.03.2013
(73) Patentinhaber: Intensiv SA, 6926 Montagnola (CH)
(72) Erfinder: Smailus, Günter, 6927 Agra (CH)
(74) Vertreter: AMMANN PATENTANWÄLTE AG BERN

(56) Entgegenhaltungen:
- EP-A1- 0 972 495
- WO-A2-2006/108312
- DE-A1-102008 033 914
- GB-A- 732 124
- US-A- 2 020 117
- US-A- 2 562 587
- US-A1- 2006 068 358
- US-A1- 2006 105 293

## Beschreibung

Die vorliegende Erfindung betrifft ein Werkzeug zur Bearbeitung von Oberflächen dentaler Materialien wie natürliche und synthetische Zähne, gemäss Oberbegriff von Anspruch 1.

Derartige Werkzeuge existieren seit über 50 Jahren. Die Abrasivpartikel, wie zum Beispiel Siliciumcarbid, sind in einem auf Silikon basierenden Gemisch eingelagert und werden in verschiedenen Formen, Farben oder Farbangaben und Grössen, in jeweils durch die Korngrössen definierten Abrasivstufen, hergestellt. Die Farbe dient zur Identifikation der Abrasivität und somit der Bearbeitungsart wie Grobbearbeitung, Polieren oder Finieren. Der Einfachheit halber wird im vorliegenden Text lediglich von Polieren, Polierwerkzeugen und -kopf gesprochen, wodurch jedoch auch alle Bearbeitungsstufen und die entsprechenden Werkzeuge und Abrasivschichten gemeint sind.

Die seit etwa 10 Jahren angebotene jüngere Generation von Werkzeugen, z. B. gemäss EP-0 972 495, weist Polierköpfe mit einer Abrasivschicht mit Diamantpartikeln auf, die in einer elastischen Einbettmasse, z.B. Silikon, eingebettet sind. Um die Menge der Diamantpartikel pro Werkzeug einzusparen, werden Polierköpfe offenbart, bei welchen lediglich in einer aktiven Zone, das heisst die Abrasivschicht, die überwiegend zur Anwendung, bzw. in Berührung mit dem zu behandelten Gegenstand kommt, Diamantpartikel eingebettet sind, während die restliche, nicht aktive Trägerschicht, keine Partikeln enthält.

Die aktive Zone entspricht dabei dem vorderen oder seitlichen Teil des Polierkopfes, je nach dessen Form. Die Abrasivität der aktiven Zone wird farblich gekennzeichnet.

Die Spindeln der Polierwerkzeuge sind überwiegend aus Metall, vereinzelt auch aus Kunststoff. Der Polierkopf wird an der Spindel durch eine in Figur 1 oder in der EP-0 972 495 als Beispiel dargestellte Standardverankerung gehalten.

Eine optimale Benutzung der Polierwerkzeuge verlangt, dass sie gleichzeitig zwei Anforderungen erfüllen: Sie müssen einerseits widerstandsfähig sein, weil sie während des Einsatzes hohen Kräften bzw. Beanspruchungen in allen möglichen Richtungen unterliegen, andererseits aber auch eine bestimmte Elastizität bzw. Flexibilität aufweisen, um eine vollkommene Zugänglichkeit zu der Morphologie des zu behandelnden Zahnes zu ermöglichen.

Die heute angebotenen Polierwerkzeuge erfüllen diese Doppelanforderung nicht. Festgestellte Nachteile dieser Werkzeuge liegen darin, dass die aktive Zone des Polierkopfes, insbesondere die Spitze, oft und leicht bricht. Da zum Zeitpunkt eines Bruches per Definition eine Druckkraft des Polierkopfes auf das zu polierende Material ausgeübt wird, ist die Wahrscheinlichkeit gross, dass die mit hoher Geschwindigkeit rotierende Spindel, ca. 5'000 - 15'000 rpm, mit dem genannten Material in Berührung kommt und, falls sie aus Metall ist, Schaden wie Verkratzungen verursachen wird. Um das Risiko eines Bruchs zu vermindern ist es notwendig, die auf dem Polierkopf ausgeübten Druckkräfte mit viel Sorgfalt zu dosieren, was sich praktisch oft recht schwierig erweist, dagegen immer mit hohem Zeitaufwand verbunden ist, will der Praktiker ein qualitativ zumindest ausreichendes Polieren einer Oberfläche erreichen.

Des Weiteren wird der Polierkopf infolge eines Bruches plötzlich eine unerwünschte und willkürliche Form annehmen.

Dies wird den Praktiker zwingen, entweder zu einem neuen Werkzeug zu greifen oder, vorausgesetzt es sei möglich, den momentanen Arbeitsgang fortzusetzen und weitere negative Folgekonzequenzen in Kauf zu nehmen, die darin bestehen, dass die gewünschten Stellen des Zahnes unzulänglich erreicht werden und darüber hinaus, die Polierqualität der unter diesen Umständen bearbeiteten Flächenteile infolge der entstehenden Rotationsvibrationen recht mangelhaft sein wird. Schliesslich kann die abgebrochene Spitze zu Problemen führen, falls sie in der Mundhöhle verbleibt und entfernt werden muss.

Um derartige unerwünschte Brüche zu vermeiden, werden Polierwerkzeuge angeboten, dessen Polierkopf eine Mindesthärte aufweisen. Doch bleibt jeder Typ dieser Werkzeuge mit Nachteilen behaftet, auch wenn das Risiko eines Bruches zwar sinken dürfte, insbesondere in Bezug auf die Qualität der Polierarbeit, des Komforts für den Patienten und/oder die Abnutzungsresistenz und die Stabilität des Werkzeuges.

DE 10 2008 033914 A1 offenbart ein Schleifsystem mit einem auf einen Körper aufsetz- und abnehmbaren kappenförmigen Schleifmittelaufsatz mit Diamantkörnern. Diese können einen Durchmesser bis 0,5 mm aufweisen. Das System ist zwar für vielerlei Schleifeinsätze vorgesehen, jedoch wird die Bearbeitung von dentalem Material nicht aufgeführt.

Die US 2 020 11 A offenbart Instrumente, deren Oberfläche mit einer Schicht von relativ grossen Diamantkörnern mit einer Grösse von 20 bis 80 mesh versehen ist, was einem Durchmesser von ungefähr 1,27 mm bis 0,3 mm entspricht. Die relativ starre Diamantschicht wird mit einer elektrolytisch aufgebrachten Metallschicht befestigt.

Die US 2 562 587 A bezieht sich auf das Anlöten einer relativ starren Abrasivschicht, wobei die Körner einen Durchmesser von etwa 0,25 mm bis 0,13 mm aufweisen.

WO 2006/108312 A2 offenbart ein Schleifwerkzeug mit einem Schaft und einem daran angebrachten Schleifkörper, der mit Schleifkörnern aus Siliziumkarbid versehen ist, die mittels einem Bindemittel aus Fritten und Mineralstoffen zusammengehalten werden.

GB-732 124 A offenbart ein hohles Dentalinstrument, das innen und aussen mit Abrasivkörnern beschichtet ist, um damit sowohl mit dem Inneren als auch mit dem Äusseren polieren zu können.

Ausgehend von diesem bekannten Stand der Technik liegt der Erfindung eine erste Aufgabe zugrunde, ein Werkzeug zur Bearbeitung von Oberflächen dentaler Materialien anzugeben, das eine hohe Bruchfestigkeit aufweist, ohne die wesentlichen anderen vorteilhaften Eigenschaften zu verlieren. Diese Aufgabe wird mit dem Werkzeug gelöst, das in Anspruch 1 definiert ist.

Es ist eine weitere Aufgabe der Erfindung ein Werkzeug mit höherer Polierleistung anzugeben. Diese Aufgabe wird mit dem Werkzeug gemäss Anspruch 12 gelöst.

Die in den abhängigen Ansprüchen definierten Merkmale stellen darauf aufbauend besonders vorteilhafte Ausführungen der Erfindung dar.

Nachstehend sind Ausführungsbeispiele der Erfindung anhand der beiliegenden Zeichnungen näher beschrieben.
- Figur 1: zeigt schematisch ein Werkzeug gemäss Stand der Technik,
- Fig. 2: zeigt schematisch ein erstes Ausführungsbeispiel eines erfindungsgemässen Werkzeugs mit ogivförmigem Polierkopf,
- Fig. 2A: zeigt ein Ausführungsbeispiel eines passenden Spindelendes zum Werkzeug von Fig. 2,
- Fig. 2B: zeigt einen Schnitt gemäss Linie IIB - IIB in Fig. 2A,
- Fig. 3: zeigt schematisch ein zweites Ausführungsbeispiel eines erfindungsgemässen Werkzeugs mit becherförmigem Polierkopf,
- Fig. 3A: zeigt ein Ausführungsbeispiel eines passenden Spindelendes zum Werkzeug von Fig. 3,
- Fig. 3B: zeigt einen Schnitt gemäss der Linie IIIB - IIIB in Fig. 3A,
- Fig. 4: zeigt schematisch und im Schnitt ein Ausführungsbeispiel eines nicht erfindungsgemässen Werkzeugs mit scheibenförmigem Polierkopf,
- Fig. 5: zeigt schematisch ein weiteres Ausführungsbeispiel eines erfindungsgemässen Werkzeugs in Form eines Stabes mit abgerundetem Ende, und
- Fig. 6: zeigt schematisch ein weiteres Ausführungsbeispiel eines erfindungsgemässen Werkzeugs in Form eines Stabes mit quaderförmigem Ende.

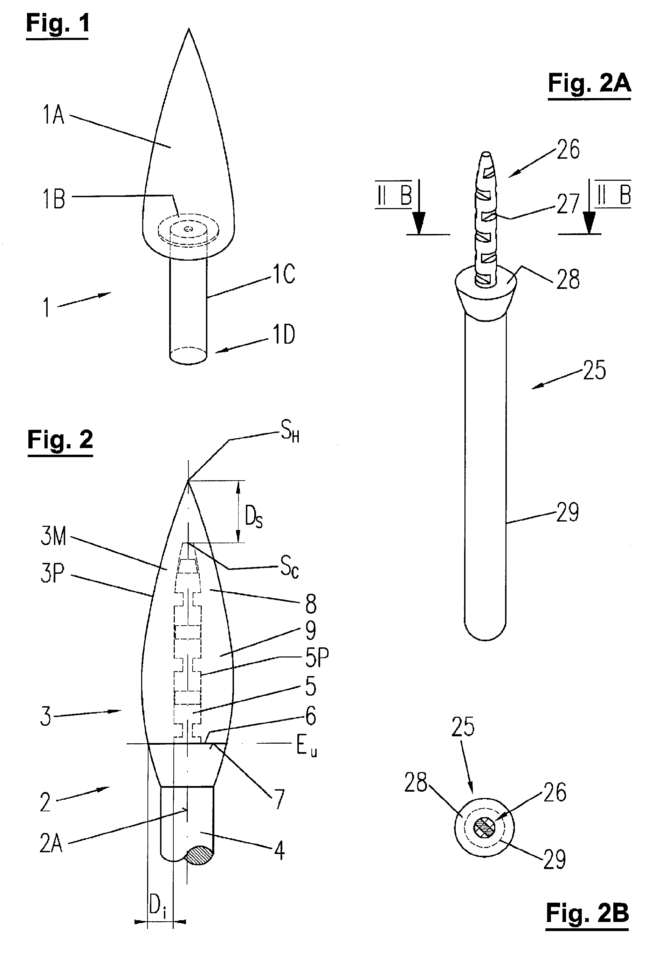

Im Prinzip weisen die Köpfe der rotierenden Werkzeuge im Wesentlichen eine längliche oder eine flächige Form auf. Die Formen sind in Bezug auf ihre Anwendung optimiert und können beispielsweise kegelig, ogivförmig, kegelstumpfartig oder pilzförmig sein. Figur 1 stellt ein Polierwerkzeug 1 des Standes der Technik dar und zeigt einen ogivförmigen Kopf 1A, in dem das scheibenförmige Ende 1B von Spindel 1C gestrichelt angegeben ist, woraus die Bruchgefahr ersichtlich ist. Das apparatseitige Ende 1D der Spindel ist geformt, in den Handapparat des Zahnarztes gesteckt zu werden, wobei für alle Beispiele verschiedene, an sich bekannte Anschlussteile in Frage kommen.

Figur 2 zeigt in einem ersten Ausführungsbeispiel der Erfindung ein um eine Drehachse 2A drehbares Polierwerkzeug 2, welches einen gemäss Profil 3P ogivförmigen Polierkopf 3 aufweist. Mit Profil ist hier die Oberfläche, bzw. die Kontur gemeint. Dieser Polierkopf 3 ist am Endteil 5 eines Schaftes 4 verankert, während das nicht sichtbare, gegenüberliegende andere Endteil des Schaftes geformt ist, in einen Handapparat eingesteckt zu werden.

Das die Funktion einer Verankerung erfüllende Endteil bildet einen Kern 5 mit Absatz 6, wobei die Form des in Figur 2 mit punktiertem Strich dargestellten Profils 5P dieses Kerns dem Profil 3P des Polierkopfes 3 ähnlich ist, also gemäss Beispiel auch ogivförmig geformt ist. Die starre Verankerung 5 ist völlig vom aktiven Teil des Polierkopfes umhüllt, ausser Absatz 6, der sichtbar bleiben kann. Die untere Fläche 7 des Polierkopfes 3 und der Absatz 6 erstrecken sich hier in einer selben Ebene Eᵤ.

Zwischen dem Profil 5P des Kernes 5 und dem Profil 3P des Polierkopfes 3 ergibt sich ein Abstand Dᵢ, welcher der Dicke der Abrasivschicht entspricht und der entweder konstant oder - wie anhand des Beispiels gemäss Figur 2 - variabel sein kann. Der Abstand Dᵢ ist konventionsmässig derjenige, der in jeglicher beliebiger, zur Achse 2A senkrechten Ebenen messbar ist. Gemäss Ausführungsbeispiel variiert er kontinuierlich. Die Distanz Dₛ zwischen dem Scheitel S_{c} des Kernes 5 und dem Scheitel S_{H} des Polierkopfes 3 resultiert geometrisch aus den ogiv- oder paraboloïdförmigen Verläufen des Kernes 5 und des Polierkopfes 3.

Dᵢ wird konstruktionsmässig auf der Basis von bestimmten Daten abgeleitet, wie die Bearbeitungsart für welche das Polierwerkzeug vorgesehen ist, bzw. die Korngrösse der im Polierkopf gebildeten, elastischen Masse eingebetteten Abrasivpartikel, die notwendige Festigkeit, um jegliche Brüche zu vermeiden, die gewünschte Elastizität und Flexibilität des Polierkopfes in Bezug auf die Dichte der Abrasivpartikel. Ausserdem wird die Schichtdicke des Abrasivteils davon abhängig sein, ob das Werkzeug für den Einmalgebrauch oder für einen Mehrfachgebrauch gedacht ist. Beispielsweise kann die Schicht für den Einmalgebrauch eine Dicke von 0,3 bis 2 mm und die Schicht für den Mehrfachgebrauch eine Dicke von 2 mm und mehr aufweisen. Bevorzugt wird für den Einmalgebrauch eine Dicke von 0,3 bis 1 mm und für den Mehrfachgebrauch eine Dicke von 2 mm und mehr.

Die Abrasivschicht 3M, die mit Abrasivpartikeln, z.B. Diamant, versehene elastische Masse, erfindungsgemäss Silikon, wird nach an sich bekannten Verfahren auf den starren Kern aufgebracht. Um die Verbindung zu dem Kern, z. B. aus Metall oder Kunststoff, zu verbessern ist es vorteilhaft, die Oberfläche des Kerns zu strukturieren. In den Figuren 2, 2A ist ein Beispiel eines strukturierten Kerns angegeben, wobei die Oberfläche 26 von Kern 25 Einschnitte 27 aufweist. In diesem Ausführungsbeispiel weist die Spindel 29 einen zum Werkzeugenende hin weisenden Absatz 28 auf, wie Absatz 6 in Fig. 2. Figur 2B zeigt einen Schnitt gemäss der Linie IIB-IIB in Fig. 2A, mit Sicht von Unten.

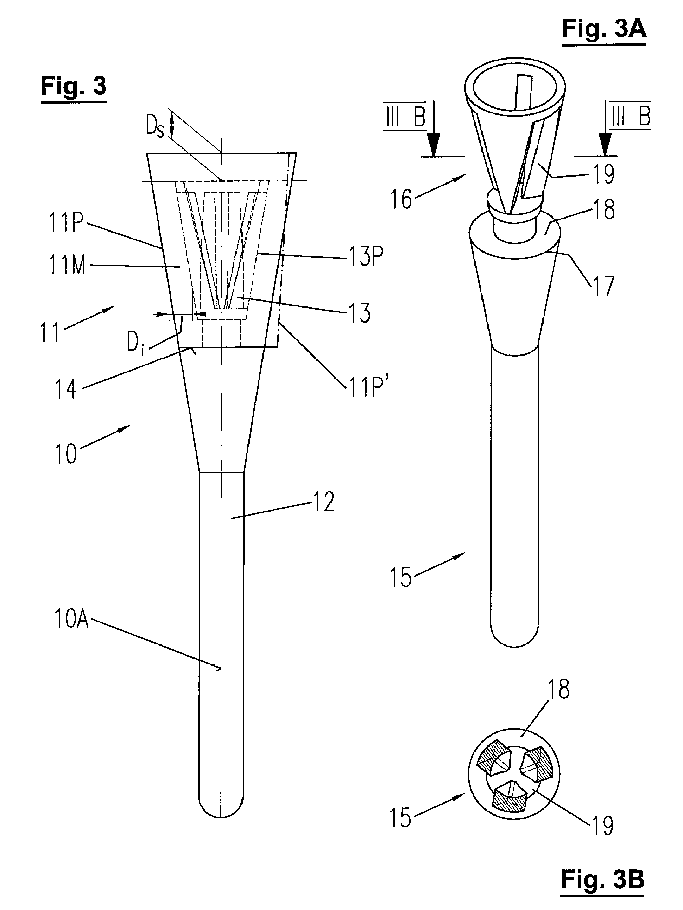

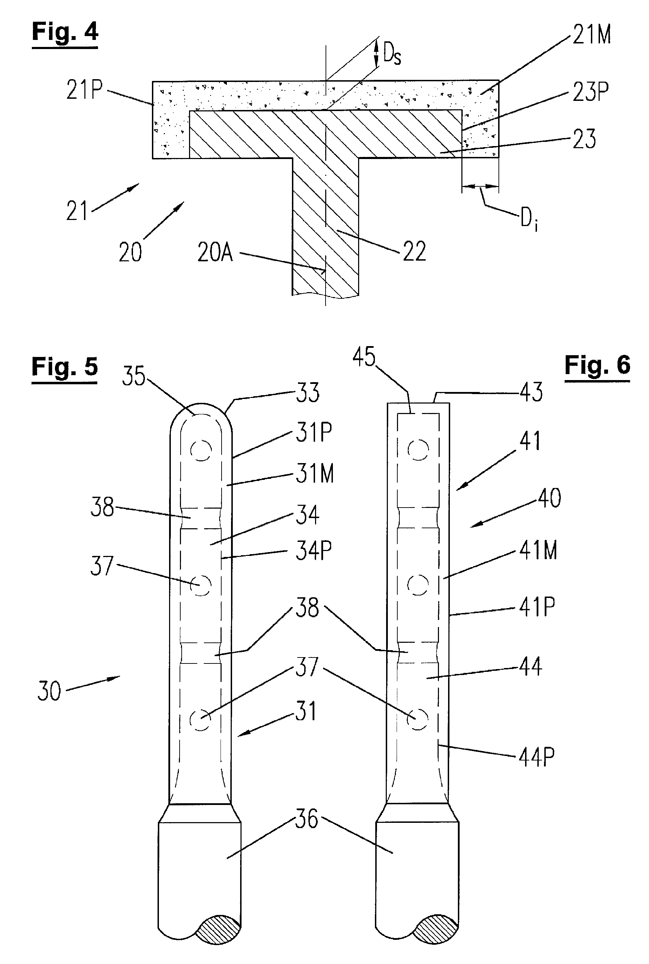

Figur 3 und Figur 4 zeigen weitere mögliche Ausführungen von rotierenden Polierwerkzeugen 10; 20. Die jeweilige Beschreibung entspricht der obigen gemäss Figur 2. In Fig. 3 ist ein Werkzeug 10 mit Drehachse 10A mit einem kegelstumpfförmigen Polierkopf 11 in Form eines Bechers dargestellt, der sich zum Werkzeugende hin verbreitert. Das Profil 13P von Kern 13 entspricht dem Profil 11P der Abrasivschicht 11M. In vorliegendem Ausführungsbeispiel ist die Abrasivschicht 11M, bzw. der Abstand Dᵢ zwischen Kernprofil 13P und Schichtprofil 11P konstant. Selbstverständlich kann dieser Abstand auch variabel sein. Während in dieser Ausführung der Kern keinen Absatz aufweist, ergibt sich ein Absatz 14 für die Abrasivschicht. Der kegelstumpfförmige Polierkopf und Kern kann sich auch zum Werkzeugende hin verjüngen und voll ausgeführt sein. In Fig. 3A ist eine mögliche, strukturierte Spindel 15 mit Kern 16 dargestellt, wobei analog zu Fig. 2A die Spindel einen Absatz 17 enthält, dessen Fläche 18 gegen das Werkzeugenende hin gerichtet ist. Der Kern 16 ist als kegelförmiger Becher ausgebildet, d.h. innen hohl und weist Schlitze 19 auf, die der besseren Verankerung der Abrasivschicht dienen. Anstatt durchgehender Schlitze sind möglich. Durch die Konizität wird zudem eine bessere Verankerung der Poliermasse, insbesondere bei der Bearbeitung erzielt. Fig. 3B ist ein Schnitt gemäss der Linie IIIB-IIIB in Fig. 3A mit Blickrichtung Apparat-Ende.

Figur 4 zeigt ein Polierwerkzeug 20 mit einem einen scheibenförmigen Kern 23 mit Profil 23P aufweisenden Schaft 22 und einem scheibenförmigen Polierkopf 21 mit analogem Profil 21P. Der Abstand Dᵢ zwischen den Profilen, bzw. die Avbrasivschicht 21M wird bei dieser Ausführung in der Regel konstant sein, kann aber auch gegebenenfalls variabel sein. 20A bezeichnet die Drehachse. Der Kern kann ebenfalls strukturiert sein, um eine bessere Verankerung der Abrasivschicht zu erzielen.

Die Figuren 5 und 6 zeigen weitere Ausführungsbeispiele eines Werkzeuges 30 oder 40 zur Bearbeitung dentaler Oberflächen. In Fig. 5 weist das Werkzeug 30 einen Kopf 31 in Form eines Stabes mit einer Abrasivschicht 31M mit einem Profil 31P mit abgerundeten Vorderteil 33 auf und einen entsprechenden Kern 34, mit einem Profil 34P mit ebenfalls abgerundeten Vorderteil 35. Der Kern ist einstückig mit der Spindel 36 hergestellt. Die Abrasivschicht kann konstant sein oder eine variable Dicke aufweisen. Zwecks besserer Verankerung der Abrasivschicht ist der Kern mit Bohrungen 37 und 38 versehen, wobei auch Querrippen zur Anwendung kommen können. Die Bohrungen können Sacklöcher oder durchgehend sein.
In der Variante gemäss Fig. 6 ist der Kopf 41 von Werkzeug 40 ebenfalls als Stab ausgebildet, jedoch weisen sowohl die Abrasivschicht 41M mit Profil 41P als auch der Kern 44 mit Profil 44P am vorderen Ende 43, bzw. 45 ein quaderförmig ausgebildetes Profil 43, bzw. 45 auf. Zwecks besserer Verankerung der Abrasivschicht ist auch hier der Kern mit Bohrungen 37 und 38 versehen, wobei auch Querrippen zur Anwendung kommen können. Die Bohrungen können Sacklöcher oder durchgehend sein.

Dadurch, dass der Kern in etwa dasselbe Profil wie die Abrasivschicht aufweist, ist es möglich, die Verteilung der Abrasivkörner, d. h. den Füllgrad, den Arbeitsverhältnissen optimal anzupassen. Vorteilhafterweise wird für den vorderen Teil 8, siehe Fig. 2, bei der Werkzeugspitze ein höherer Anteil von Diamantpartikeln verwendet als beim hinteren Teil 9. Dies ergibt eine grössere Abrasivleistung an den Stellen, an denen die intensivste Arbeit anfällt. Dadurch ist ein schnelleres und auch genaueres Arbeiten möglich.

Die Verteilung der Diamantpartikel, bzw. die Grenze zwischen dem vorderen und hinteren Teil ist je nach Anwendungszweck, verwendete Einbettmassen und Abrasivkörnern verschieden und kann an jede Situation angepasst werden. Beispielsweise kann das Volumenverhältnis vorderer Teil zu hinterer Teil 1/3 zu 2/3 sein und der Füllungsgrad kann zwischen 80% am vorderen Ende und 10% am hinteren Teil variieren.
Die Verankerung bzw. der Kern übt somit seine primäre Funktion dank seiner Formgebung in Bezug zur äusserlichen Form des Polierkopfes und dank der Tatsache, dass der Kern eine monolithische Einheit mit dem Schaft 4 bildet, aus. Gleichzeitig hat der Kern mit dem ähnlichen Profil wie die Abrasivschicht eine wirtschaftliche Bedeutung, da er die optimale Lösung bei der Minimierung der Masse der Abrasivschicht und damit der Diamantpartikel sowie des Polierkopfes mit sich bringt.

Es ist die Ausführung der Strukturierungen des Kernes nicht auf die gezeigten Beispiele beschränkt. Möglich sind eine grosse Vielfalt von Vertiefungen, Erhebungen oder Schlitze. Die verschiedensten Anwendungsmöglichkeiten beziehen sich auch auf die zu verwendenden Materialien sowohl des Kernes als auch der Abrasivschicht

## Patentansprüche

1. Werkzeug für die Bearbeitung von Oberflächen dentaler Materialien, mit einer Spindel, deren eines Ende mit einer einen Kopf bildenden Abrasivschicht versehen ist, wobei die Abrasivschicht (3M, 11M, 31M, 41M) einen elastischen Kunststoff aufweist, in dem Abrasivpartikel eingebettet sind und deren anderes Ende mit Mitteln zum Verbinden mit einem Dentalapparat versehen ist, **dadurch gekennzeichnet, dass** der Kunststoff Silikon ist und das eine Ende der Spindel (15, 25, 36), auf welchem die Abrasivschicht (3M, 11M, 31M, 41M) angeordnet ist, die eines der Profile kegelig, kegelstumpfartig, stabförmig mit abgerundetem oder quaderförmigem freien Ende, ogivförmig, pilzförmig oder becherförmig aufweist, als, der Verankerung der Abrasivschicht dienender, starrer Kern (5, 13, 26, 34, 44) ausgebildet ist, dessen Profil (5P, 13P, 34P, 44P) dem Profil (3P, 11P, 31P, 41P) der Abrasivschicht ähnlich geformt ist und dementsprechend eines der Profile kegelig, kegelstumpfartig, stabförmig mit abgerundetem oder quaderförmigem freien Ende, ogivförmig, pilzförmig oder becherförmig aufweist, und die Abrasivschicht den Kern mit Ausnahme des apparatseitigen Abschlusses umhüllt und eine Dicke von mindestens 0,3 mm aufweist.

2. Werkzeug gemäss Anspruch 1, **dadurch gekennzeichnet, dass** das Profil (11P) des Kopfes (11) und das Profil (13P) des Kerns (13, 16) kegelstumpfartig ausgebildet sind, wobei sich der Kegelstumpf zum freien Ende hin verbreitert.

3. Werkzeug gemäss Anspruch 1, **dadurch gekennzeichnet, dass** das Profil des Kopfes und das Profil des Kerns kegelstumpfartig ausgebildet sind, wobei sich der Kegelstumpf zum freien Ende hin verjüngt.

4. Werkzeug gemäss einem der Ansprüche 1 bis 3, **dadurch gekennzeichnet, dass** die Dicke (Dᵢ) der Abrasivschicht (3M, 21M, 31M, 41M) konstant ist.

5. Werkzeug gemäss einem der Ansprüche 1 bis 3, **dadurch gekennzeichnet, dass** die Dicke (Dᵢ) der Abrasivschicht (11M) variabel ist, wobei sie zur Werkzeugspitze hin abnimmt.

6. Werkzeug gemäss einem der Ansprüche 1 bis 5, **dadurch gekennzeichnet, dass** die Oberfläche des Kernes (5, 13, 23, 26, 34, 44) mit Mitteln (19, 27, 37, 38) versehen ist, die der besseren Verankerung der Abrasivschicht dienen.

7. Werkzeug gemäss einem der Ansprüche 1 bis 6, **dadurch gekennzeichnet, dass** die Abrasivschicht (3M, 11M, 21M, 31M, 41M) einen variablen Füllungsgrad an Abrasivkörnern aufweist, wobei der Füllungsgrad am freien Ende (8) grösser ist als am apparatseitigen Ende (9).

## Claims

1. Tool for the treatment of surfaces of dental materials, comprising a shank one end of which is provided with an abrasive layer that forms a head, the abrasive layer (3M, 11M, 31M, 41M) comprising an elastic synthetic material in which abrasive particles are embedded, and the other end of which is provided with means for connection to a dental handpiece, **characterised in that** the synthetic material is silicone and the end of the shank (15, 25, 36) on which the abrasive layer (3M, 11M, 31M, 41M) is provided, whose profile is one of conical, frustoconical, rod-shaped with a rounded or prismatic free end, ogival, mushroom-shaped, or cup-shaped, is in the form of a rigid core (5, 13, 26, 34, 44) that serves to anchor the abrasive layer whose profile (5P, 13P, 34P, 44P) is similar in shape to the profile (3P, 11P, 31P, 41P) of the abrasive layer and correspondingly is one of conical, frustoconical, rod-shaped with a rounded or prismatic free end, ogival, mushroom-shaped, or cup-shaped, and the abrasive layer encloses the core with the exception of its termination on the handpiece side and has a thickness of at least 0.3 mm.

2. Tool according to claim 1, **characterised in that** the profile (11P) of the head (11) and the profile (13P) of the core (13, 16) are frustoconical and the truncated cone enlarges towards the free end.

3. Tool according to claim 1, **characterised in that** the profile of the head and the profile of the core are frustoconical and the truncated cone tapers towards the free end.

4. Tool according to one of claims 1 to 3, **characterised in that** the thickness (Dᵢ) of the abrasive layer (3M, 21M, 31M, 41M) is constant.

5. Tool according to one of claims 1 to 3, **characterised in that** the thickness (Dᵢ) of the abrasive layer (11M) is variable and diminishes towards the tool tip.

6. Tool according to one of claims 1 to 5, **characterised in that** the surface of the core (5, 13, 23, 26, 34, 44) is provided with means (19, 27, 37, 38) serving for a better anchorage of the abrasive layer.

7. Tool according to one of claims 1 to 6, **characterised in that** the abrasive layer (3M, 11M, 21M, 31M, 41M) has a variable filling degree of abrasive grains, the filling degree being higher at the free end (8) than at the end on the handpiece side (9).

## Revendications

1. Outil pour le traitement de surfaces de matériaux dentaires, comprenant une tige dont l'une des extrémités est pourvue d'une couche abrasive formant une tête, ladite couche abrasive (3M, 11M, 31M, 41M) comprenant un matériau synthétique élastique dans lequel sont encastrées des particules abrasives, et dont l'autre extrémité est pourvue de moyens de connexion à un embout à main, **caractérisé en ce que** le matériau synthétique est le silicone et que l'une des extrémités de la tige (15, 25, 36), sur laquelle est pourvue la couche abrasive (3M, 11M, 31M, 41M), laquelle présente l'un des profils conique, tronconique, en forme de tige à extrémité libre arrondie ou parallélépipédique, ogival, fongiforme ou cupuliforme, est réalisée sous la forme d'un noyau rigide (5, 13, 26, 34, 44) servant d'ancrage à la couche abrasive et dont le profil (5P, 13P, 34P, 44P) est semblable au profil (3P, 11P, 31P, 41P) de la couche abrasive et présente de manière correspondante l'un des profils conique, tronconique, en forme de tige à extrémité libre arrondie ou parallélépipédique, ogival, fongiforme ou cupuliforme, et que la couche abrasive enveloppe le noyau à l'exception de sa terminaison du côté de l'embout à main et présente une épaisseur d'au moins 0,3 mm.

2. Outil selon la revendication 1, **caractérisé en ce que** le profil (11P) de la tête (11) et le profil (13P) du noyau (13, 16) sont tronconiques, le tronc de cône s'élargissant vers l'extrémité libre.

3. Outil selon la revendication 1, **caractérisé en ce que** le profil de la tête et le profil du noyau sont tronconiques, le tronc de cône s'amincissant vers l'extrémité libre.

4. Outil selon l'une des revendications 1 à 3, **caractérisé en ce que** l'épaisseur (Dᵢ) de la couche abrasive (3M, 21M, 31M, 41M) est constante.

5. Outil selon l'une des revendications 1 à 3, **caractérisé en ce que** l'épaisseur (Dᵢ) de la couche abrasive (11M) est variable et diminue vers la pointe de l'outil.

6. Outil selon l'une des revendications 1 à 5, **caractérisé en ce que** la surface du noyau (5, 13, 23, 26, 34, 44) est pourvue de moyens (19, 27, 37, 38) servant à un meilleur ancrage de la couche abrasive.

7. Outil selon l'une des revendications 1 à 6, **caractérisé en ce que** la couche abrasive (3M, 11M, 21M, 31M, 41M) présente un degré de remplissage en grains abrasifs variable, le taux de charge étant plus haut à l'extrémité libre (8) qu'à l'extrémité (9) du côté de l'embout.
